# EUROPEAN PATENT SPECIFICATION

(11) **EP 1 939 620 B1**
(45) Date of publication and mention of the grant of the patent: **07.09.2011**
(21) Application number: 08250007.5
(22) Date of filing: 02.01.2008
(51) Int. Cl.: G01N 31/12

(54) **Combustion analyser**
Verbrennungsanalysator
Analyseur de combustion

(30) Priority: 29.12.2006 GB 0625938
(43) Date of publication of application: 02.07.2008
(73) Proprietor: Thermo Electron Manufacturing Ltd., Cambridge (GB)
(72) Inventor: Smeets, Louis Marie, 1056 NR Amsterdam (NL); Van der Zalm, Marinus Arnoldus Wilhelmus, 2635 HT Den Hoorn ZH (NL)
(74) Representative: Parlett, Peter Michael

(56) References cited:
- DE-B- 1 032 000
- DE-C1- 4 344 441
- DE-U1- 8 134 950
- GB-A- 1 069 267
- US-A- 4 950 456
- US-B1- 6 511 850

## Description

The invention relates to a combustion analysis apparatus and method.

Combustion analysers are used to determine the concentration of one or more components of a liquid sample, by combusting the sample and analysing the gaseous products for specific oxides. Typically, the carbon, sulphur and/or nitrogen content of the sample is measured by detecting CO₂, SO₂ and NOₓ, respectively.

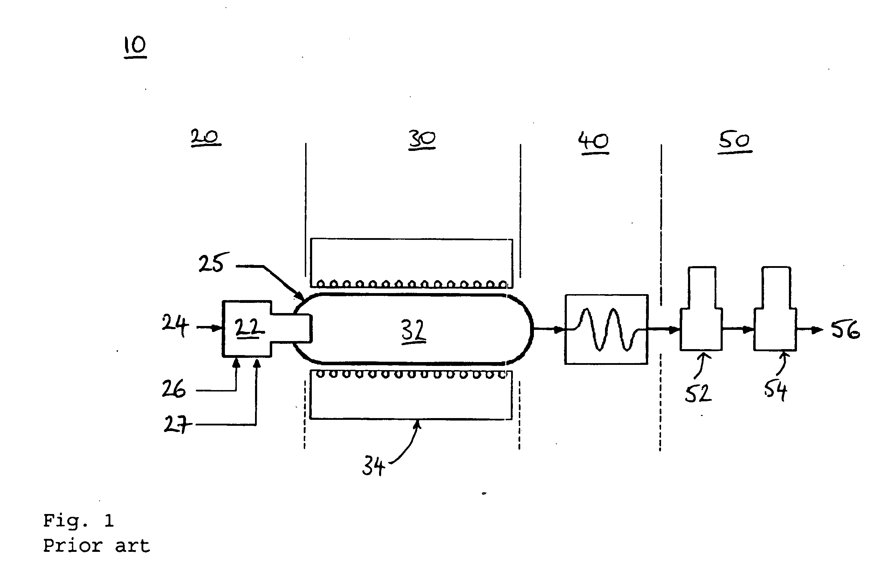

A schematic illustration of a typical combustion analyser is shown in figure 1. The combustion analyser 10 comprises a sample introduction stage 20, a combustion stage 30, a conditioning stage 40, and a detection stage 50. The sample introduction stage 20 comprises a sample introduction apparatus 22, to which are connected a supply of a sample 24, a supply of oxygen 26 and a supply of argon 27. The sample introduction apparatus 22 introduces these fluids into a combustion tube, or chamber, 32 in a suitable form for combustion to take place. A further supply of oxygen 25 is provided, directly into the combustion chamber 32. The combustion chamber 32 is heated by an electric heater 34, so that the sample is delivered into an oxygen-rich atmosphere at high temperature, typically of around 1000°C. The sample is thereby converted into various combustion products, such as CO₂, H₂O, SO₂, NOₓ, etc. The combustion products leave the combustion chamber 32 and pass through the conditioning stage 40, where processes such as cooling, filtering, drying, etc. take place. The conditioned products then pass through one or more dedicated detectors 52, 54, in which properties of the components of the combustion products may be detected. For example, CO₂ may be detected by absorption of infrared radiation, using a non-dispersive infrared (NDIR) detector; SO₂ may be detected by fluorescence with ultraviolet light, using a UV light sensor; and NOₓ can be detected from de-excitation processes following the reaction of nitrogen monoxide (NO) with ozone (O₃) to form excited NO₂, using a chemiluminescence light sensor. The detected signals are indicative of the respective amount of each component of the combustion products and can therefore be related to the composition of the original liquid sample. Finally, the detected combustion products are passed out of the detection stage 50, as waste products 56.

The performance of such a combustion analyser 10 - in terms of its suitability, reliability, accuracy and robustness - depends strongly on the manner in which the liquid sample is presented to the combustion chamber 32. There are two, principal techniques known for transferring a liquid sample into a combustion chamber: "direct injection" and "vapour introduction". While both techniques have their uses, each is subject to a number of limitations and disadvantages.

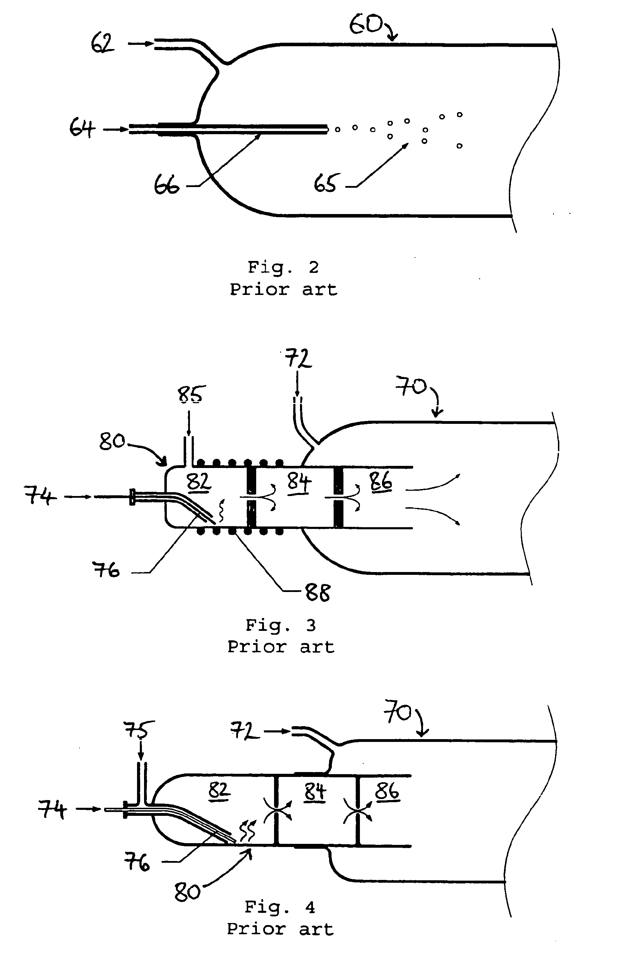

Figure 2 shows a known direct injection arrangement. A combustion tube, or chamber, 60 is heated by a heater (not shown) to a temperature of around 1000°C. A supply of oxygen 62 is provided as a combustion gas into the combustion chamber 60. A liquid sample 64 is injected directly into the combustion chamber 60, using a narrowbore, ceramic needle 66. The sample leaves the needle 66 as sample droplets 65, which are then combusted.

The direct injection technique is relatively simple to implement. However, if organic samples are injected into the hot, oxygen-rich combustion chamber 60, the relatively large sample droplets will each burn vigorously, leading to a locally increased rate of heat evolution, resulting in hotspots at very high temperatures, of possibly more than 1500°C. These hotspots can result in undesirable oxidation reactions taking place in the combustion chamber 60, such as the combustion of traces of nitrogen gas into NOₓ, or sulphur into SO₃. Such undesirable combustion products lead to faulty analysis results. Furthermore, the combustion of large sample droplets can result in local oxygen deficiencies, leading to regions of incomplete combustion. This causes soot, or heavy residue, to be produced which can contaminate the downstream gas conditioner and detectors.

Accordingly, the direct injection technique is only used for inorganic samples, such as water-based samples, or in analysers using a catalyst, so that the combustion may be performed at relatively low temperatures, to avoid hotspots. However, using a catalyst has many disadvantages, including loss of effectiveness (through degradation over time and contamination from samples) and selectivity (promotion of the oxidation of some components better than others), so that catalysts need to be replaced regularly and analysers need to be calibrated frequently.

Another disadvantage of the direct injection technique is that the injection needle 66 can become blocked. This is a result of the needle 66 being located in the hot combustion chamber 60 and itself reaching high temperatures. Evaporation of the liquid sample 64 inside the injection needle 66 may take place and dissolved solids in the sample can then be deposited as a residue on the inside of the needle, eventually leading to needle blockage and analyser failure.

Figures 3 and 4 show known vapour introduction arrangements. A sample 74 is introduced into a combustion tube, or chamber, 70 by means of an introduction tube 80. The introduction tube 80 is divided into an evaporation chamber 82, a mixing chamber 84, and a mixing/outlet chamber 86, which opens into the combustion chamber 70. A sample injection needle 76 is angled towards an inside surface of the evaporation chamber 82. An inert gas, typically argon, is also supplied to the evaporation chamber 82. In figure 3, an inlet port is provided in the wall of the mixing chamber 82 for the argon 85, whereas, in figure 4, the argon 75 is provided through a tube which surrounds the injection needle 76. A heater 88 is provided around the evaporation and mixing chambers 82, 84. Finally, a source of oxygen 72 is provided via an inlet port into the combustion chamber 70.

The sample 74 is injected towards an inside surface of the evaporation chamber 82, which contains an inert, argon atmosphere at a moderate temperature, typically of 500°C. Here, the sample 74 will evaporate and may, to some extent, undergo thermal cracking. The sample 74 is then carried by and mixed with the argon gas through the mixing chamber 84 and mixing/outlet chamber 86, from where it passes into the combustion chamber 70. There, the sample vapour and argon mix with oxygen, and combustion takes place.

The vapour introduction technique is intended to avoid some of the disadvantages of the direct injection technique. Since the sample 74 is in the gas phase and "protected" by argon, the combustion is less vigorous than with the direct injection technique and the occurrence of hotspots, with all their negative side effects, is reduced.

Although the vapour introduction technique addresses the hotspot problem, it still suffers from a number of disadvantages. The technique is limited to samples which may be fully converted into the gas phase by evaporation or thermal cracking, under the given conditions. Thus, a sample, which contains or produces (by condensation) heavy components, such as those having boiling points above 450°C, cannot be handled. In addition, although less severe compared with the direct injection technique, sample evaporation and consequent blocking in the injection needle 76 is still a problem, especially with "dirty" samples. Furthermore, the use of argon is costly and acts to dilute the combustion gases, thereby impairing the subsequent analysis.

US 4,914,037, US 4,950,456, US 6, 511, 850 and WO-A1-98/38507 show alternative vapour introduction techniques. The above discussion also generally applies to these arrangements.

DE 1,032,000 relates to a method and apparatus for measuring trace components in organic samples, using a burner coupled to a combustion chamber via a ground opening.

There is a need, therefore, for a combustion analyser sample introduction technique, which reduces or avoids the above disadvantages. The invention aims to address the above and other objectives by providing an improved combustion analyser sample introduction apparatus and method.

According to one aspect of the invention, there is provided a combustion analyser comprising: a heated combustion chamber comprising a chamber opening; and a sample supply apparatus comprising: a supply member extending through the chamber opening and comprising a downstream member end disposed within the combustion chamber; a supply spray head received in the downstream member end and comprising a discharge opening for delivery of a liquid sample and a carrier gas into the combustion chamber; a carrier gas supply conduit arranged to supply a carrier gas to the discharge opening, thereby defining a carrier gas flow path thereto; a sample supply conduit having a downstream first end arranged to pass through the supply member towards the supply spray head and to supply a liquid sample into the carrier gas flow path at a sample supply location within the sample supply apparatus adjacent the discharge opening, wherein the sample supply location is within the combustion chamber, such that, in use, a liquid sample is transported by a carrier gas out of the discharge opening as a spray into the combustion chamber; and a thermally conductive member having a downstream portion disposed near to, adjacent to, or on, the downstream first end of the sample supply conduit and an upstream end of the thermally conductive member is located remote from the downstream first end of the sample supply conduit, the thermally conductive member being configured to conduct heat from its downstream portion towards its upstream portion.

Where the sample supply conduit and the carrier gas supply conduit meet, a flow of sample will be disrupted by the carrier gas. The carrier gas will break up the sample flow and entrain the sample. The sample will then be discharged from the supply head as a fine mist or spray. A sample may therefore be supplied as a spray directly into a combustion chamber. Since the sample droplets formed in the spray are of relatively small size, during their combustion not enough heat is generated to create local hotspots, so that undesirable, high-temperature oxidation reactions and local oxygen deficiencies leading to soot formation can be avoided.

Preferably, the sample supply conduit defines a sample flow path which is substantially normal to the carrier gas flow path, at the sample supply location. This helps to improve the break-up and entraining of the sample of the carrier gas.

A supply inlet may be defined as a location where the carrier gas is provided to the discharge opening. The supply inlet may be provided to the discharge opening through a sidewall of the discharge opening. Preferably, the supply inlet is provided at an upstream end of the discharge opening, substantially coaxial with a discharge axis of the discharge opening. Either way, preferably, a first portion of the carrier gas supply conduit which leads to the supply inlet is substantially normal to the discharge axis. Advantageously, the first portion directs carrier gas radially into the supply inlet. Preferably, the carrier gas supply conduit is configured to direct the carrier gas to the supply inlet from at least two opposing directions. Preferably, at least the first end of the sample supply conduit is disposed about the discharge axis, so that the sample is supplied along that axis into the carrier gas flow path. These configurations help to provide mixing flow conditions, so that the entrained sample is well dispersed as fine droplets throughout the carrier gas.

Preferably, the supply head comprises a cavity having a cavity sidewall and a cavity front wall. The front wall has the discharge opening therethrough, preferably beginning with the supply inlet. The sample supply conduit is configured to extend into the cavity, towards the discharge opening in the front wall. Preferably, the first portion of the carrier gas supply conduit is provided by a gap formed between the cavity front wall and the first end of the sample supply conduit. Preferably, the gap has a width (between the end of the sample supply conduit and the cavity front wall) of 0.2 mm or less, most preferably 0.1 mm. The cavity front wall is preferably round and has a diameter of 3 mm.

The above width is preferably fixed, at a dimension selected to provide beneficial flow characteristics to the sample introduction apparatus. However, in some embodiments, the sample supply conduit may be translatable, so that the width is adjustable, to allow tuning of the apparatus.

A second portion of the carrier gas supply conduit, which leads to the first, may be provided by one or more channels formed between an outer surface of the first end of the sample supply conduit and an inner surface of the cavity sidewall. In this way, the second portion may be formed simply by disposing the first end in the cavity. Alternatively, the second portion may be provided by one or more channels formed, for example by drilling of bores, within a radially outer region of the first end of the sample supply conduit. Either way, the one or more channels provide a fluid communication path from a third portion of the carrier gas supply conduit, upstream of the supply head, to the first portion.

Preferably, the sample supply conduit has an internal diameter of 0.3 mm. Preferably also, the discharge opening has an internal diameter of 0.3 mm, and an axial length of 0.5 mm.

With the above configurations, a flow path arrangement may be set up in which a sample is supplied into, entrained and dispersed by, a carrier gas flow, so that the sample is discharged from the supply head as a spray. The relative flow rates of the sample and the carrier gas may be configured to provide varying flow characteristics, so that the sample droplet size and flow speed out of the discharge opening can be controlled. Preferably, a carrier gas flow controller is provided to control the carrier gas flow rate to between approximately 3 and 7 ml/s, more preferably to between 200 and 400 ml/min. Preferably, a sample flow controller is provided to control the sample flow rate to between approximately 1 and 3 µl/s.

Advantageously, the carrier gas is oxygen. This allows the sample to be mixed with oxygen before and as the sample is sprayed into a combustion chamber, so that increased combustion efficiency may be achieved. It also allows for a cost saving compared with the use of a relatively more expensive carrier gas alternative, such as argon. In prior art arrangements, an inert gas is generally used as the carrier gas, to prevent combustion taking place before the combustion chamber due to heating of the sample introduction apparatus. With the arrangement of the present invention, the sample may be sprayed into the combustion chamber at a relatively lower temperature, so that combustion does not take place until inside the combustion chamber itself. This is especially beneficial for analysis of highly volatile (low boiling point) samples. Accordingly, oxygen may be used as the carrier gas.

The sample supply conduit is advantageously received within a supply member, by the sample supply conduit passing inside a member opening disposed through the supply member. The supply member has a member end in which the supply head is received. Preferably, a member channel is formed between an outer surface of the sample supply conduit and an inner surface of the member opening, the member channel providing a portion of the carrier gas supply conduit upstream of the supply head. This provides a relatively simple arrangement for the sample and carrier gas supply conduits.

Advantageously, a downstream portion of a thermally conductive member is disposed near to, adjacent to, or on, the downstream first end of the sample supply conduit. An upstream end of the thermally conductive member is located remote from the first end of the sample supply conduit. The thermally conductive member is configured to conduct heat from the downstream portion towards the upstream portion, and thereby to conduct heat away from the first end of the sample supply conduit. Preferably, a cooling device is provided to cool the upstream portion of the thermally conductive member. Either way, the sample supply conduit, and preferably also the supply head, may be maintained at a relatively low temperature, to reduce or avoid evaporation and residue formation in the sample supply conduit (and discharge opening). Thus, blocking of the sample introduction apparatus may be avoided.

Advantageously, the supply member is the thermally conductive member. This has the advantage of reducing the number of separate components in the apparatus.

The apparatus is provided with a combustion chamber having a chamber opening and the supply member extends through the chamber opening such that at least the downstream member end is located within the combustion chamber. Thus, a sample for combustion analysis may be discharged from the supply head into the combustion chamber as a spray. In embodiments of the invention, the sample spray is carried into the combustion chamber at a flow rate such that the sample droplets spread out in the combustion chamber, heating up as they travel away from the supply head, before finally being combusted. Thus, the supply head can be relatively protected against deterioration and the combustion front can be spread over a large area, ensuring a more uniform combustion (with reduced occurrence of hotspots and local oxygen deficiencies).

When using the thermally conductive member and cooling device, it is possible to maintain the downstream end of the sample introduction apparatus at temperatures below 60°C, while the temperatures in the combustion chamber in the region surrounding the sample introduction apparatus are well above 600°C. In order to ensure that substantially no sample and/or combustion products condense on the relatively cold thermally conductive member, a make-up, or compensation, gas is preferably directed along or over the member in the combustion chamber. Preferably, the gas is oxygen. The gas is preferably supplied via an inlet port provided in the combustion chamber.

Preferably, the sample supply conduit is modified to accept the sample supply tube of an autosampler. The internal diameter of the sample supply conduit is sized to allow the autosampler supply tube to pass into it, as far as a stopping portion, of reduced internal diameter. This allows for a reduction in the number of rinsing steps between samples and can help to reduce cross-contamination between samples.

The sample introduction apparatus is provided as part of a combustion analyser, comprising a combustion chamber, a heater, and at least one detector.

According to a further aspect of the invention, there is provided a combustion analysis using method the combustion analyser comprising a combustion chamber comprising a chamber opening; and a sample supply apparatus comprising: a supply member extending through the chamber opening and comprising a downstream member end disposed within the combustion chamber; and a supply spray head received in the downstream member end and comprising a discharge opening for delivery of a liquid sample and a carrier gas into the combustion chamber, the method comprising: providing a flow of carrier gas through a carrier gas supply conduit into the discharge opening; providing a flow of liquid sample through a sample supply conduit arranged to pass through the supply member, the sample being provided into the carrier gas flow within the sample supply apparatus adjacent the discharge opening within the combustion chamber, such that the sample is entrained by the carrier gas and is supplied through the discharge opening into the combustion chamber as a spray; and cooling the supply member.

Other preferred features and advantages of the invention are set out in the description and in the dependent claims which are appended hereto.

The invention may be put into practice in a number of ways and some embodiments will now be described, by way of non-limiting example only, with reference to the following figures, in which:
Figure 1 shows a schematic layout of a typical, prior art combustion analyser;
Figure 2 shows schematically a partial cross section of a prior art, direct injection arrangement;
Figure 3 shows schematically a partial cross section of a prior art, vapour introduction arrangement;
Figure 4 shows schematically a partial cross section of another prior art, vapour introduction arrangement;
Figure 5 shows schematically a sample introduction apparatus according to one embodiment of the invention;
Figure 6 shows schematically a sample introduction apparatus according to another embodiment of the invention;
Figure 7 shows schematically a sample introduction apparatus according to a further embodiment of the invention; and
Figure 8 shows schematically a sample introduction apparatus according to a still further embodiment of the invention.

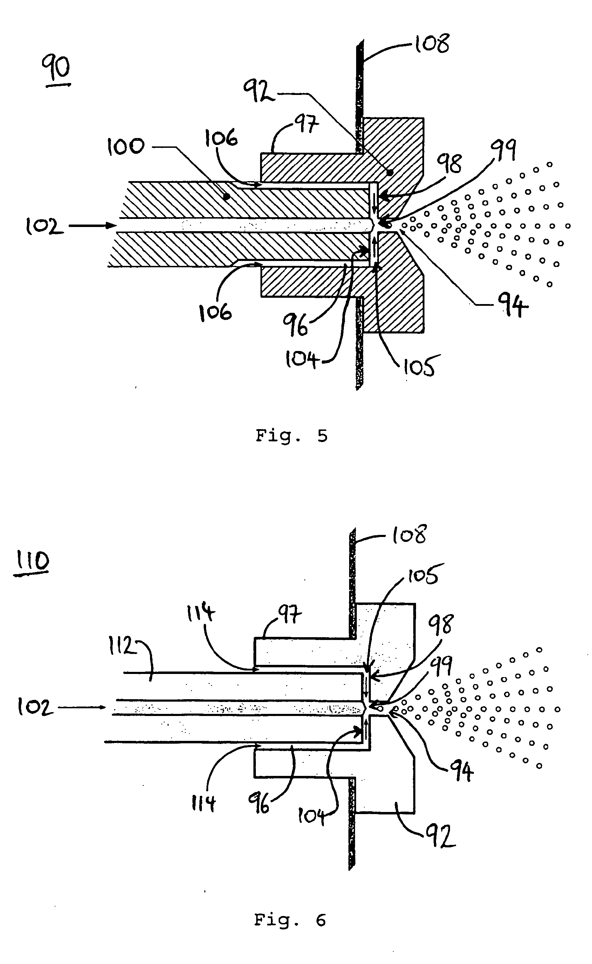

Referring to Figure 5, there is shown a sample introduction apparatus 90 according to one embodiment of the invention. The sample introduction apparatus 90 acts as a spray injector, to discharge a liquid sample therefrom in the form of a spray or mist. The sample introduction apparatus 90 comprises a spray head 92, which has a spray, or discharge, opening 94 extending axially through a downstream, combustion chamber-facing part of the spray head. On an upstream, sample supply-facing part of the spray head 92 is formed a cylindrical cavity 96, which has a flat front wall 98. A supply inlet 99 formed at the centre of the front wall 98 provides a fluid communication path between the cavity 96 and the spray opening 94.

The sample introduction apparatus 90 also comprises a sample supply tube 100 having a channel 102 running therethrough. The tube 100 has an annular-profiled, downstream end 104, which extends in the cavity 96 towards the front wall 98. A disc-shaped gap 105 is formed between the end 104 and the front wall 98. An outer surface of the tube 100 is configured to fit closely within the cavity 96. A number of grooves 106 are machined in the outer surface, at the downstream end, so as to extend longitudinally from the end 104 and terminate beyond the cavity 96. A fluid communication path is thereby provided from a region external of the tube 100 and spray head 92, through the channels formed by the grooves 106 and the sidewall of the cavity 96, through a 90° bend and into the gap 105 between the tube front end 104 and the cavity front wall 98, through a 90° bend and through the supply inlet 99 into the spray opening 94, and finally out of the sample introduction apparatus 90. This path provides a flow path for oxygen gas, serving as a carrier gas. The portion of the oxygen flow path upstream of the spray head 92 is defined by a channel formed between the outer surface of the sample supply tube 100 and an inner surface of a supply housing 108, only part of which is shown in Figure 5. The supply housing 108 extends longitudinally and has a bore therethrough, of a diameter suitable to receive the annular portion 97 of the spray head 92 with a close fit. As such, an annular channel is formed between the sample supply tube 100 and the supply housing 108.

A sample flow path is defined by a fluid communication path from the sample supply channel 102, into the gap 105 between the tube front end 104 and the cavity front wall 98. At this location, the sample flow path passes into the oxygen carrier gas flow path. The sample flow path extends along an axis which is substantially coaxial with a discharge axis defined by the spray opening 94, so meets the oxygen carrier gas flow path substantially normally thereto.

In use, oxygen is pumped or drawn along the carrier gas flow path described above. That is, the oxygen flows from an oxygen supply, along the annular channel between the sample supply tubing 100 and the supply housing 108, and into the channels formed by the grooves 106. At the end of the grooves 106, the oxygen flow changes direction by substantially 90° and the oxygen enters the disc-shaped gap 105 and flows radially towards its centre, into the supply inlet 99. At the supply inlet 99, the oxygen flow changes direction again by substantially 90° and runs through the spray opening 94. At the exit of the spray opening 94, the oxygen flow is discharged and undergoes jet-like free expansion. The spray head 92 at the exit of the spray opening 94 has a countersunk-like concave formation therein, centred on the spray opening.

When a liquid sample is to be analysed in a combustion analyser, the sample is pumped or drawn along the sample flow path. That is, the sample flows from a sample supply, along the sample supply channel 102 and into the oxygen carrier gas flow path in the gap 105, just upstream of the supply inlet 99. Because of the radial oxygen flow into the supply inlet 99, the sample is broken up into small droplets at this confluence. The small sample droplets are entrained by and mixed with the oxygen gas flow, and carried therewith into the spray opening 94. From there, the mixture of the oxygen and the small sample droplets is discharged from the spray opening 94 and caused to spread out and disperse with the free expansion into the region beyond the spray head 92. When assembled in a combustion analyser, this region is inside a combustion chamber, in which the sample is to be combusted, using the oxygen carrier gas also as a combustion gas.

In this embodiment, the inner diameter of the sample supply channel 102 is 0.3 mm, but may be between approximately 0.25 and 0.3 mm. The diameter of the grooves 106 is 0.1 mm. The diameter of the cavity 96 is 3 mm. The width of the gap 105 between the tube front end 104 and the cavity front wall 98 is 0.1 mm, but may be between approximately 0.1 and 0.2 mm. The spray opening 94 has a diameter of 0.3 mm and an axial length of 0.5 mm. These dimensions are given as approximate values.

Preferred operational parameters are as follows. The flow rate of the oxygen carrier gas is between 200 and 400 ml/min, or between 3 and 7 ml/s. The flow rate of the liquid sample (for a typical sample volume of 100 µl) is between 1 and 3 µl/s. Such flow rates are controlled by respective flow controllers.

With such a small dimension for the gap 105 and the narrow spray opening 94, very high local gas flow speeds, of up to, and indeed over, 200 km/h, can be realised. These high gas flows will break up the liquid sample flowing out of the supply channel 102 into very small droplets and carry them at high speed into a combustion chamber. The highspeed oxygen flow substantially normally to the sample flow - at the location where they meet - helps to ensure the reproducible formation of a very fine mist under the relatively low sample flow conditions.

By using the described sample introduction apparatus 90, the occurrence of undesirable hotspots in the combustion chamber can be reduced, if not avoided. The spray head 92 injects a fine mist of sample droplets mixed with oxygen into the combustion chamber. The sample droplets are sufficiently small that, during their combustion, not enough heat is generated to create local hotspots.

In the above embodiment, the relative positions of the spray head 92 and the sample supply conduit 100 are fixed. However, the sample supply tube may be provided with a translator, which is arranged to adjust the distance between the sample supply tube front end 104 and the cavity front wall 98, so that the sample introduction apparatus may be tuned for a particular use. Indeed, a prototype sample introduction apparatus was initially so arranged, in order to test out different configurations and their spray characteristics. If the gap 105 is set with a width above a certain value, generally found to be above 0.2 to 0.3 mm, relatively large droplets are produced, instead of a desirable, fine mist or spray. This results in visible flashes of light in the combustion chamber - i.e. the occurrence of hotspots - and the detectors indicate an increase in the levels of nitrogen oxides (NO_{X}) in the combustion gases, due to the oxidation of trace amounts of nitrogen gas (which would normally remain as N₂ at the standard temperatures in the combustion chamber, of around 1000°C). If the gap 105 is set with a width below a certain value, generally found to be less than about 0.5 mm, the back pressure on the oxygen supply becomes too great due to the restriction of the gap 105. If the gap 105 is correctly tuned, a fine mist or spray of sample is produced and no visible light flashes are observed and the detectors do not indicate an increase in NOₓ levels.

The dimensions specified for the above embodiment have an effect on the spray performance of the sample introduction apparatus 90. Particularly important are the diameter of the cavity 96 and the distance between the tube front end 104 and the cavity front wall 98; i.e. the dimensions of the disc-like gap 105. The width of the gap 105 influences the oxygen flow speed with which the sample fluid is broken up into small droplets. Up to a point (as explained above), for a smaller gap 105, there is a higher oxygen gas flow speed and a smaller size of produced droplets. The diameter of the gap 105 influences the radial pressure drop over the gap, which in turn affects the supply of sample, in terms of whether it is supplied from the sample supply tube 100 and into the spray opening 94, rather than into any dead spaces in the sample introduction apparatus (such as oxygen supply grooves 106). The other dimensions of the sample introduction apparatus are not so important and are mainly determined by practical considerations.

With the sample introduction apparatus 90, the ratio of sample to oxygen can be easily controlled and maintained, helping to reduce the risk of soot production. By providing a metering pump for the sample and a mass flow controller for the oxygen, the ratio of sample to oxygen can be adjusted, so that at any time sufficient oxygen is present for complete combustion of the sample to take place, thereby avoiding soot production. In addition, local oxygen deficiencies leading to soot formation are unlikely, due to the improved mixing characteristics of the sample introduction apparatus 90. Indeed, it has been found that it is possible for samples to be fully combusted with almost the theoretical minimum amount of oxygen, without soot production. Even with less than the theoretical minimum amount of oxygen, no soot formation is observed; however, of course, uncombusted sample components (including cracking products) can be detected in the waste gases.

In practice, the sample introduction apparatus 90 can handle much higher sample flow rates than, for example, with the vapour introduction technique, providing the benefit of shorter analysis times. Typical analysis times with the vapour introduction technique are 5-8 minutes, whereas, with the sample introduction apparatus 90, they may only be 2-3 minutes.

Figure 6 shows another embodiment of the invention, with a sample introduction apparatus 110 similar to that shown in figure 5. Accordingly, similar or identical features are referred to with the same reference numerals. The difference here is that the sample supply tube 112 does not have grooves in it. Instead, the outer diameter of the sample supply tube 112 is set approximately 0.2 mm less than the diameter of the cavity 96, so that when the tube 112 is positioned within the cavity, an annular channel is formed therebetween, the width of the annulus being around 0.1 mm. Otherwise, the configuration and operation of the sample introduction apparatus 110 is the same as for the sample introduction apparatus 90.

In other embodiments, the grooves 106 of the sample introduction apparatus 90 may be of any number, but are preferably provided as an even number of radially opposing grooves. Alternatively, the 'groove' may extend all the way around the circumference of the tube 100, so that the tube has a downwardly stepped outer diameter towards the front end 104. Alternatively still, the grooves may be replaced by a number of drilled holes in a radially outer part of the sample supply tube, the holes connecting a region outside the spray head 92 with the gap 105.

In some embodiments, the supply inlet 99 may be provided in the sidewall of the spray opening 94, rather than being disposed about the discharge axis and at the upstream end of the spray opening. In this way, the carrier gas flow path may extend into the spray head 92 (from the grooves or annular channel) and into a disc-like chamber or series of radial ports within the spray head, towards the supply inlet and discharge opening. As such, part of the spray opening axially upstream of the supply inlet (i.e. between the sample supply tube 100, 112 and the supply inlet 99) may be considered to form a part of the sample supply channel 102, since the sample would need to pass through that part before reaching the supply inlet, from which oxygen flows to generate the small sample droplets for spray generation.

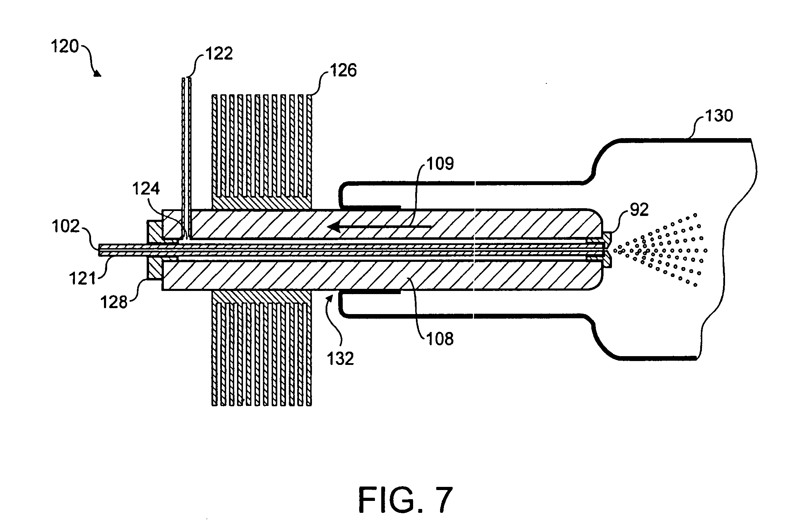

Figure 7 shows schematically a sample introduction apparatus 120 in accordance with another embodiment of the invention. The sample introduction apparatus 120 is shown in assembly with a combustion chamber 130. As with the previous embodiments, a sample supply tube 121 has a channel 102 for directing sample fluid towards the spray head 92.
At the spray head 92, an oxygen carrier gas channel 124 is in communication with the gap between the sample supply tube 121 and the cavity front wall 98, and from there through the supply inlet 99 and spray opening 94 for discharge into the combustion chamber 130. The sample introduction apparatus 120 may be configured in any of the ways described previously, as will be understood.

The spray head 92 and sample supply tube 121 are received within a supply housing 108. The sample supply tube 121 is held in place by a spacer plug 128, which maintains the separation of the tube from the inside surface of the bore running through the supply housing 108 and also provides a seal to the upstream end of the housing. The annular space formed between the sample supply tube 121 and the inside surface of the bore of the supply housing provides the oxygen channel 124. This channel 124 is connected to an oxygen supply via an oxygen supply channel 122, which passes through the supply housing 108 from the bore, at an upstream end thereof.

In order to prevent or reduce premature sample evaporation and tube blocking, the sample introduction apparatus 120 is provided with a thermally conductive member, or heat sink. The thermally conductive member runs from a region near to, adjacent to, or on, the downstream end of the sample supply tube 121 towards an upstream end thereof and is arranged to conduct heat away from the downstream end towards the upstream end.

In the embodiment shown in figure 7, the thermally conductive member is provided by the supply housing 108 itself. A downstream portion of the thermally conductive member is received through an opening 132 to the combustion chamber 130. The downstream portion houses the spray head 92, the sample supply channel 102 and the oxygen supply channel 124. An upstream portion of the thermally conductive member is located externally of the combustion chamber 130. In use, a temperature gradient is set up along the thermally conductive member, as heat is transferred from the downstream, combustion chamber end towards the upstream, supply-side end, as indicated by arrow 109. In order to provide a relatively large temperature gradient along the thermally conductive member, a cooling device 126 is provided on the upstream portion.

The thermally conductive member may be any suitable material. In this embodiment, the thermally conductive member (supply housing 108) is provided by a rod of copper, due to its high heat conductivity. The dimensions of the copper rod affect the cooling efficiency of the member. The length of the rod is determined by the desired depth of insertion of the sample introduction apparatus 120 into the combustion chamber 130 and also by the size of the cooling device 126 used. Preferably, the length is kept as short as possible, typically around 100 mm. The diameter of the rod affects its heat transport capacity and is preferably as large as possible, typically between approximately 16 and 20 mm.

The cooling device 126 may be provided by a cooling jacket disposed around an upstream portion of the thermally conductive member, the cooling jacket containing water, oil, air or the like. Alternatively, the cooling device 126 may be provided by a Peltier cooling module or any other suitable cooler.

So, in use, heat from the combustion chamber heater (not shown), which would otherwise undesirably raise the temperature of the sample supply tube 121 and spray head 92, is conducted away by the thermally conductive member, towards the upstream portion, and is removed by the cooling device 126. It has been found that it is possible to maintain the sample supply tube 121, the carrier gas supply channel 124 and the spray head 92 at temperatures below 60°C, while temperatures surrounding the spray head in the combustion chamber 130 are well above 600°C.

Keeping the sample introduction apparatus 120 at a relatively low temperature helps to prevent or reduce evaporation of liquid sample in the supply tubing before discharge from the spray head 92 and the resulting residue build up and possible tube blocking. It also helps to protect the spray head 92 against deterioration and to reduce the occurrence of hotspots. This is because the small sample droplets are discharged from the sample introduction apparatus 120 at a relatively low temperature. As the spray travels further into the combustion chamber 130, the spray spreads out, gradually heats up, and eventually ignites. Thus, the actual combustion starts at a certain distance from the sample introduction apparatus 120, helping to reduce or prevent deterioration and contamination of the sample introduction apparatus. In addition, the combustion front is spread out over a larger area, lowering the chance of local hotspots occurring.

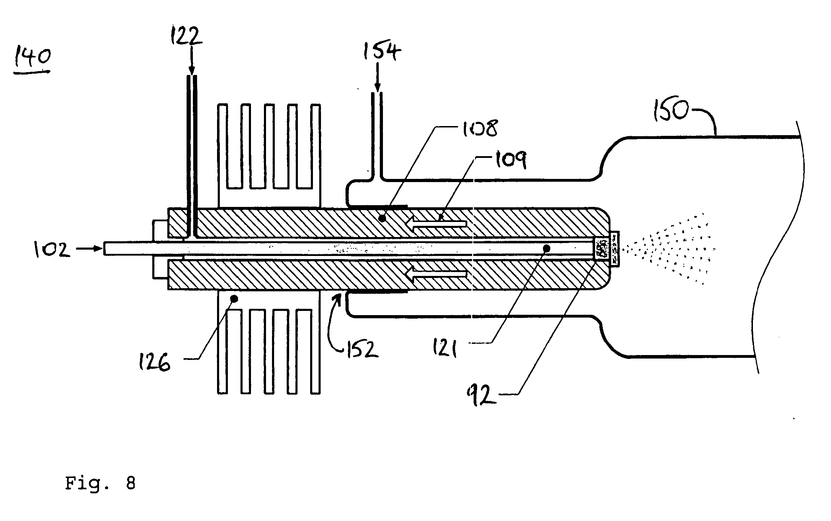

With the sample introduction apparatus 120, there is a possibility that some of the sample and/or combustion products in the combustion chamber 130 will condense on the relatively cold thermally conductive member within the chamber. In order to address this, a make-up, or compensation, gas is directed over that part of the thermally conductive member. A sample introduction apparatus 140 in combination with a combustion chamber 150 is therefore provided, in accordance with another embodiment of the invention, as shown in figure 8. The sample introduction apparatus 140 is configured and operated in a similar manner to the sample introduction apparatus 120, so no further discussion is provided here.

The combustion chamber 150 is provided with a make-up gas inlet 154, close to its opening 152 end. The make-up gas is preferably oxygen. The oxygen is supplied through the inlet 154 and, from there, runs down a neck portion of the combustion chamber 150 and into the main portion thereof where sample combustion takes place. In doing so, the oxygen flows over the surface of the thermally conductive member (supply housing 108) and helps to flush any sample and/or combustion products away from the member and into the main portion of the combustion chamber 150, so that condensation on the member is reduced or prevented.

As described above, the liquid sample may be supplied from the sample introduction apparatus along a sample supply channel 102. However, in an alternative embodiment, the sample supply channel 102 may be modified to accept the supply needle, or tube, of an autosampler. The diameter of the sample supply channel 102 is widened, if necessary, to match the needle dimensions, so that the needle may pass into the channel with a close fit. However, the diameter of the channel 102, at the last 0.1 mm or so from the front end, is not widened, so that it forms a stopping portion, against which the needle abuts. In this way, the autosampler needle can be used to supply a sample into the oxygen carrier gas flow path at the spray head 92. This arrangement can provide a saving in sample supply tubing and also helps to reduce the number of rinsing steps required between samples, as well as reducing cross-contamination between samples.

Embodiments of the sample introduction apparatus may be provided relatively simply and cost effectively, since the apparatus comprises relatively few components, each of which is reasonably inexpensive to manufacture; it need have no user-adjustable components; it requires relatively little maintenance; and it is expected to have a relatively long working life.

With embodiments of the sample introduction apparatus of the invention, it is possible to inject any liquid sample into a combustion chamber. The sample may be supplied at high speeds. Higher sample-injection speeds result in shorter analysis times. During supply, the sample may be maintained at a relatively low temperature. The sample may be supplied and combusted without excessive heat evolution, soot creation, or tube blocking. It is possible to control and maintain the sample-to-oxygen ratio during operation. Argon gas is not required as a carrier gas, since oxygen may be used and is preferred, thereby providing an operational cost saving. The sample introduction apparatus can lead to a more controlled and homogeneous combustion of samples and a more efficient combustion of samples. It is also possible to combust samples without boiling point restrictions on the type of sample.

The invention may be employed for various applications in, for example, the chemical, refinery, hydrocarbon, petrochemical, and food and beverage sectors. The invention may be used in the analysis of substantially all liquid samples. In particular, the invention may be used in the analysis of refinery products, such as gasoline and diesels.

## Claims

1. A combustion analyser comprising:
a heated combustion chamber (130, 150) comprising a chamber opening (132, 152); and
a sample supply apparatus comprising:
a supply member (108);
a carrier gas supply conduit (105, 106, 114, 122) arranged to supply a carrier gas; and
a sample supply conduit (100, 102) having a downstream first end (104) passing through the supply member and arranged to supply a liquid sample,
**characterised in that**:
the supply member (108) extends through the chamber opening and comprises a downstream member end disposed within the combustion chamber;
the sample supply apparatus further comprises a supply spray head (92) received in the downstream member end and comprising a discharge opening (94) for delivery of a liquid sample and a carrier gas into the combustion chamber; and a thermally conductive member having a downstream portion disposed near to, adjacent to, or on, the downstream first end of the sample supply conduit and an upstream end of the thermally conductive member is located remote from the downstream first end of the sample supply conduit, the thermally conductive member being configured to conduct heat from its downstream portion towards its upstream portion;
the carrier gas supply conduit (105, 106, 114, 122) is arranged to supply a carrier gas to the discharge opening,
thereby defining a carrier gas flow path thereto;
the downstream first end (104) of the sample supply conduit (100, 102) passes through the supply member towards the supply spray head and to supply a liquid sample into the carrier gas flow path at a sample supply location within the sample supply apparatus adjacent the discharge opening; and
the sample supply location is within the combustion chamber, such that, in use, a liquid sample is transported by a carrier gas out of the discharge opening as a spray into the combustion chamber.

2. The apparatus (90, 110, 120, 140) of claim 1, wherein the sample supply conduit (100, 102) defines a sample flow path to the sample supply location and the sample flow path is substantially normal to the carrier gas flow path at the sample location.

3. The apparatus (90, 110, 120, 140) of claim 1 or 2, wherein the supply spray head (92) further comprises a cavity (96) having a cavity sidewall and a cavity front wall (98), the front wall having the discharge opening (94) therethrough, and the first end (104) of the sample supply conduit (100, 102) is arranged to extend in the cavity and towards the discharge opening in the front wall.

4. The apparatus (90, 110, 120, 140) of claim 3, wherein a first portion of the carrier gas supply conduit (105) which leads to the discharge opening (94) is provided by a gap formed between the cavity front wall (98) and the first end (104) of the sample supply conduit (100, 102).

5. The apparatus (90, 110, 120, 140) of claim 4, wherein the gap (105) has a width of 0.2 mm or less.

6. The apparatus (90, 110, 120, 140) of claim 5, wherein the gap (105) has a width of 0.1 mm.

7. The apparatus (90, 110, 120, 140) of any of claims 3 to 6, wherein the cavity front wall (98) is substantially round and has a diameter of 3 mm.

8. The apparatus (90, 110, 120, 140) of any of claims 3 to 7, further comprising a sample supply conduit translator arranged to adjust a distance between the first end (104) of the sample supply conduit (100, 102) and the cavity front wall (98).

9. The apparatus (90, 110, 120, 140) of any of claims 4 to 8 when dependent on claim 4, wherein a second portion of the carrier gas supply conduit which leads to the first portion is provided by one or more channels (106, 114) formed either between an outer surface of the first end of the sample supply conduit (100, 102) and an inner surface of the cavity sidewall or within a radially outer region of the first end of the sample supply conduit, the one or more channels providing a fluid communication path from a third portion (124) of the carrier gas supply conduit upstream of the supply spray head (92) to the first portion.

10. The apparatus (90, 110, 120, 140) of any of the preceding claims, wherein the sample supply conduit (100, 102) has an internal diameter of 0.3 mm.

11. The apparatus (90, 110, 120, 140) of any of the preceding claims, wherein the discharge opening (94) has a diameter of 0.3 mm.

12. The apparatus (90, 110, 120, 140) of any of the preceding claims, wherein the discharge opening (94) has an axial length of 0.5 mm.

13. The apparatus (90, 110, 120, 140) of any of the preceding claims, wherein the carrier gas is oxygen.

14. The apparatus (90, 110, 120, 140) of any of the preceding claims, the supply member (108) further comprising a member opening therethrough for receiving the sample supply conduit (100, 102), a member channel (124) being formed between an outer surface of the sample supply conduit and an inner surface of the member opening, the member channel being arranged to provide a portion of the carrier gas supply conduit upstream of the supply spray head (92).

15. The apparatus (90, 110, 120, 140) of any preceding claim, further comprising a cooling device (126) arranged to cool the upstream portion of the thermally conductive member.

16. The apparatus (90, 110, 120, 140) of any preceding claim, wherein the supply member (108) is the thermally conductive member.

17. The apparatus (90, 110, 120, 140) of any preceding claim, the combustion chamber (150) further comprising an inlet port (154) arranged to direct a make-up gas over the thermally conductive member within the combustion chamber, so as to prevent or reduce the condensation of liquid sample or combustion products on the member, in use.

18. The apparatus (90, 110, 120, 140) of any of the preceding claims, wherein the sample supply conduit (100, 102) is adapted to receive a sample supply tube of an autosampler.

19. The apparatus (90, 110, 120, 140) of claim 18, wherein the sample supply conduit (100, 102) comprises a stopping portion of reduced internal diameter at the first end, the stopping portion serving as a stop for the autosampler sample supply tube.

20. A combustion analysis method using a combustion analyser, the combustion analyser comprising a heated combustion chamber (130, 150) comprising a chamber opening (132, 152); and a sample supply apparatus comprising: a supply member (108), the method comprising:
providing a flow of carrier gas through a carrier gas supply conduit (105, 106, 114, 122);
providing a flow of liquid sample through a sample supply conduit (100, 102) arranged to pass through the supply member,
**characterised by**:
the supply member (108) extending through the chamber opening and comprising a downstream member end disposed within the combustion chamber;
the sample supply apparatus further comprising a supply spray head (92) received in the downstream member end and comprising a discharge opening (94) for delivery of a liquid sample and a carrier gas into the combustion chamber;
the flow of carrier gas through the carrier gas supply conduit (105, 106, 114, 122) being provided into the discharge opening;
the sample being provided into the carrier gas flow within the sample supply apparatus at or adjacent the discharge opening within the combustion chamber, such that the sample is entrained by the carrier gas and is supplied through the discharge opening into the combustion chamber as a spray; and
cooling the supply member.

21. The method of claim 20, wherein the sample is provided into the carrier gas flow in a direction substantially normal thereto.

22. The method of claim 20 or 21, wherein the carrier gas is oxygen.

23. The method of any of claims 20 to 22, further comprising the step of passing a make-up gas along the cooled supply member (108), so as to reduce or prevent the formation of condensates thereon.

## Patentansprüche

1. Verbrennungsanalysator, der Folgendes aufweist:
Eine beheizte Verbrennungskammer (130, 150), die eine Kammeröffnung (132, 152) aufweist; und
eine Probenzufuhrvorrichtung, die Folgendes aufweist:
Ein Zufuhrelement (108);
einen Trägergaszufuhrkanal (105, 106, 114, 122), der für die Zufuhr eines Trägergases angeordnet ist; und
einen Probenzufuhrkanal (100, 102), der ein stromabwärtiges erstes Ende (104) aufweist, das durch das Zufuhrelement hindurchgeht und zur Zufuhr einer Flüssigkeitsprobe angeordnet ist,
**dadurch gekennzeichnet, dass**:
sich das Zufuhrelement (108) durch die Kammeröffnung erstreckt und ein innerhalb der Verbrennungskammer angeordnetes stromabwärtiges Element aufweist;
die Probenzufuhrvorrichtung weiterhin einen Zufuhrsprühkopf (92) aufweist, der in dem Ende des stromabwärtigen Elementes aufgenommen ist, und eine Auslassöffnung (94) zur Lieferung einer Flüssigkeitsprobe und eines Trägergases in die Verbrennungskammer aufweist; und ein thermisch leitendes Element, das einen stromabwärtigen Abschnitt aufweist, der in der Nähe des stromabwärtigen ersten Endes des Probenzufuhrkanals, daran angrenzend oder darauf angeordnet ist, und wobei ein stromaufwärtiges Ende des thermisch leitenden Elementes entfernt von dem stromabwärtigen ersten Ende des Probenzufuhrkanals angeordnet ist, wobei das thermisch leitende Element so ausgestaltet ist, dass es Wärme von seinem stromabwärtigen Abschnitt zu seinem stromaufwärtigen Abschnitt leitet;
der Trägergaszufuhrkanal (105, 106, 114, 122) für die Zufuhr eines Trägergases zu der Auslassöffnung angeordnet ist,
wodurch ein Trägergasflussweg dorthin festgelegt wird;
das stromabwärtige erste Ende (104) des Probenzufuhrkanals (100, 102) durch das Zufuhrelement in Richtung des Zufuhrsprühkopfes hindurchgeht, und zur Zufuhr einer Flüssigkeitsprobe in den Trägergasflussweg an einer Probenzufuhrstelle innerhalb der Probenzufuhrvorrichtung angrenzend an die Auslassöffnung angeordnet ist; und
die Probenzufuhrstelle innerhalb der Verbrennungskammer derart angeordnet ist, dass bei Gebrauch eine Flüssigkeitsprobe durch ein Trägergas als Spray aus der Auslassöffnung in die Verbrennungskammer transportiert wird.

2. Vorrichtung (90, 110, 120, 140) nach Anspruch 1, wobei der Probenzufuhrkanal (100, 102) einen Probenflussweg zu der Probenzufuhrstelle festlegt, und der Probenflussweg im Wesentlichen normal zu dem Trägergasflussweg an der Probenstelle ist.

3. Vorrichtung (90, 110, 120, 140) nach Anspruch 1 oder 2, wobei der Zufuhrsprühkopf (92) weiterhin einen Hohlraum (96) mit einer Hohlraumseitenwand und einer Hohlraumstirnwand (98) aufweist, wobei die Stirnwand die Auslassöffnung (94) durch sie hindurch aufweist, und wobei das erste Ende (104) des Probenzufuhrkanals (100, 102) so angeordnet ist, dass es sich in den Hohlraum und in Richtung der Auslassöffnung in der Stirnwand erstreckt.

4. Vorrichtung (90, 110, 120, 140) nach Anspruch 3, wobei ein erster Abschnitt des Trägergaszufuhrkanals (105), der zu der Auslassöffnung (94) führt, mit einem zwischen der Hohlraumstirnwand (98) und dem ersten Ende (104) des Probenzufuhrkanals (100, 102) ausgebildeten Spalt bereitgestellt wird.

5. Vorrichtung (90, 110, 120, 140) nach Anspruch 4, wobei der Spalt (105) eine Breite von 0,2 mm oder weniger aufweist.

6. Vorrichtung (90, 110, 120, 140) nach Anspruch 5, wobei der Spalt (105) eine Breite von 0,1 mm aufweist.

7. Vorrichtung (90, 110, 120, 140) nach einem der Ansprüche 3 bis 6, wobei die Hohlraumstirnwand (98) im Wesentlichen rund ist, und einen Durchmesser von 3 mm aufweist.

8. Vorrichtung (90, 110, 120, 140) nach einem der Ansprüche 3 bis 7, die weiterhin einen Probenzufuhrkanalumsetzer aufweist, der angeordnet ist, um einen Abstand zwischen dem ersten Ende (104) des Probenzufuhrkanals (100, 102) und der Hohlraumstirnwand (98) anzupassen.

9. Vorrichtung (90, 110, 120, 140) nach einem der Ansprüche 4 bis 8, wenn unabhängig von Anspruch 4, wobei ein zweiter Abschnitt des Trägergaszufuhrkanals, der zu dem ersten Abschnitt führt, mit einem oder mehreren Kanälen (106, 104) versehen ist, die entweder zwischen einer Außenfläche des ersten Endes des Zufuhrkanals (100, 102) und einer Innenfläche der Hohlraumseitenwand, oder innerhalb eines radialen Außenbereiches des ersten Endes des Probenzufuhrkanals ausgebildet ist, wobei der eine oder mehrere Kanäle einen Strömungsverbindungsweg von einem dritten Abschnitt (124) des Trägergaszufuhrkanals stromaufwärts des Zufuhrsprühkopfes (92) zu dem ersten Abschnitt bereitstellt/bereitstellen.

10. Vorrichtung (90, 110, 120, 140) nach einem der vorhergehenden Ansprüche, wobei der Probenzufuhrkanal (100, 102) einen Innendurchmesser von 0,3 mm aufweist.

11. Vorrichtung (90, 110, 120, 140) nach einem der vorhergehenden Ansprüche, wobei die Auslassöffnung (94) einen Durchmesser von 0,3 mm aufweist.

12. Vorrichtung (90, 110, 120, 140) nach einem der vorhergehenden Ansprüche, wobei die Auslassöffnung (94) eine Axiallänge von 0,5 mm aufweist.

13. Vorrichtung (90, 110, 120, 140) nach einem der vorhergehenden Ansprüche, wobei das Trägergas Sauerstoff ist.

14. Vorrichtung (90, 110, 120, 140) nach einem der vorhergehenden Ansprüche, wobei das Zufuhrelement (108) weiterhin ein Element aufweist, das sich dadurch hindurch öffnet, um den Probenzufuhrkanal (100, 102) aufzunehmen, wobei ein Elementkanal (124) zwischen einer Außenfläche des Probenzufuhrkanals und einer Innenfläche der Elementöffnung ausgebildet wird, wobei der Elementkanal angeordnet ist, um einen Abschnitt des Trägergaszufuhrkanals stromaufwärts des Zufuhrsprühkopfes (92) bereitzustellen.

15. Vorrichtung (90, 110, 120, 140) nach einem beliebigen vorhergehenden Anspruch, die weiterhin eine Kühlvorrichtung (126) aufweist, die zum Kühlen des stromaufwärtigen Abschnitts des thermisch leitenden Elementes angeordnet ist.

16. Vorrichtung (90, 110, 120, 140) nach einem beliebigen vorhergehenden Anspruch, wobei das Zufuhrelement (108) das thermisch leitende Element ist.

17. Vorrichtung (90, 110, 120, 140) nach einem beliebigen vorhergehenden Anspruch, wobei die Verbrennungskammer (150) weiterhin einen Einlassanschluss (154) aufweist, der angeordnet ist, um ein Zusatzgas über das thermisch leitende Element innerhalb der Verbrennungskammer zu leiten, um die Kondensation von Flüssigkeitsproben oder Verbrennungsprodukten auf dem Element bei Gebrauch zu vermeiden oder zu verringern.

18. Vorrichtung (90, 110, 120, 140) nach einem der vorhergehenden Ansprüche, wobei der Probenzufuhrkanal (100, 102) angepasst ist, um ein Probenzufuhrrohr eines automatischen Probengebers aufzunehmen.

19. Vorrichtung (90, 110, 120, 140) nach Anspruch 18, wobei der Probenzufuhrkanal (100, 102) einen Stoppabschnitt mit verringertem Innendurchmesser an dem ersten Ende aufweist, wobei der Stoppabschnitt als Anschlag für das Probenzufuhrrohr des automatischen Probengebers dient.

20. Verbrennungsanalyseverfahren unter Verwendung eines Verbrennungsanalysators, wobei der Verbrennungsanalysator eine beheizte Verbrennungskammer (130, 150) mit einer Kammeröffnung (132, 152) aufweist; und eine Probenzufuhrvorrichtung, die Folgendes aufweist: ein Zufuhrelement (108), wobei das Verfahren Folgendes umfasst:
Bereitstellung eines Stromes von Trägergas durch einen Trägergaszufuhrkanal (105, 106, 114, 122);
Bereitstellung eines Stromes einer Flüssigkeitsprobe durch einen Probenzufuhrkanal (100, 102) der angeordnet ist, um durch das Zufuhrelement hindurchzugehen,
**gekennzeichnet dadurch:**
**dass** sich das Zufuhrelement (108) durch die Kammeröffnung erstreckt und ein innerhalb der Verbrennungskammer angeordnetes stromabwärtiges Element aufweist;
**dass** die Probenzufuhrvorrichtung einen Zufuhrsprühkopf (92) aufweist, der in dem Ende des stromabwärtigen Elementes aufgenommen ist, und eine Auslassöffnung (94) zur Ausgabe einer Flüssigkeitsprobe und eines Trägergases in die Verbrennungskammer aufweist;
**dass** die Bereitstellung eines Stromes von Trägergas durch einen Trägergaszufuhrkanal (105, 106, 114, 122) erfolgt, der in der Auslassöffnung bereitgestellt wird; dass das Trägergas in dem Trägergasstrom innerhalb der Probenzufuhrvorrichtung an oder angrenzend an der Auslassöffnung innerhalb der Verbrennungskammer so bereitgestellt wird, dass die Probe von dem Trägergas mitgerissen, und durch die Auslassöffnung als Spray in die Verbrennungskammer zugeführt wird; und
Kühlen des Zufuhrelementes.

21. Verfahren nach Anspruch 20, wobei die Probe in dem Trägergasstrom in einer Richtung bereitgestellt wird, die im Wesentlichen normal dazu ist.

22. Verfahren nach Anspruch 20 oder 21, wobei das Trägergas Sauerstoff ist.

23. Verfahren nach einem der Ansprüche 20 bis 22, das weiterhin den Schritt des Leitens eines Zusatzgases entlang des gekühlten Zufuhrelementes (108) umfasst, um die Ausbildung von Kondensaten darauf zu verringern oder zu vermeiden.

## Revendications

1. Analyseur de combustion, comprenant:
une chambre de combustion chauffée (130, 150) présentant une ouverture de chambre (132, 152); et
un dispositif de fourniture d'échantillon, comprenant:
un élément d'alimentation (108);
une conduite d'alimentation de gaz porteur (105, 106, 114, 122) agencée de manière à fournir un gaz porteur; et
une conduite de fourniture d'échantillon (100, 102) présentant une première extrémité aval (104) qui passe à travers l'élément d'alimentation et qui est agencée de manière à fournir un échantillon de liquide,
**caractérisé en ce que**:
l'élément d'alimentation (108) s'étend à travers l'ouverture de chambre et présente une extrémité d'élément aval qui est disposée à l'intérieur de la chambre de combustion;
le dispositif de fourniture d'échantillon comprend en outre une tête de pulvérisation d'alimentation (92) qui est reçue dans l'extrémité d'élément aval et qui présente une ouverture de décharge (94) pour distribuer un échantillon de liquide et un gaz porteur dans la chambre de combustion; et un élément thermiquement conducteur présentant une partie aval qui est disposée à proximité de ou de façon adjacente à la première extrémité aval de la conduite de fourniture d'échantillon, et une extrémité amont de l'élément thermiquement conducteur est située à distance de la première extrémité aval de la conduite de fourniture d'échantillon, l'élément thermiquement conducteur étant configuré de manière à conduire la chaleur de sa partie aval en direction de sa partie amont;
la conduite d'alimentation de gaz porteur (105, 106, 114, 122) est agencée de manière à fournir un gaz porteur à l'ouverture de décharge, définissant ainsi un chemin d'écoulement de gaz porteur vers celle-ci;
la première extrémité aval (104) de la conduite de fourniture d'échantillon (100, 102) passe à travers l'élément d'alimentation en direction de la tête de pulvérisation d'alimentation et est agencée de manière à fournir un échantillon de liquide dans le chemin d'écoulement de gaz porteur à un emplacement de fourniture d'échantillon à l'intérieur du dispositif de fourniture d'échantillon qui est adjacent à l'ouverture de décharge; et
l'emplacement de fourniture d'échantillon est situé à l'intérieur de la chambre de combustion, de telle sorte que, lors de l'utilisation, un échantillon de liquide soit transporté par un gaz porteur hors de l'ouverture de décharge sous la forme d'un aérosol dans la chambre de combustion.

2. Dispositif (90, 110, 120, 140) selon la revendication 1, dans lequel la conduite de fourniture d'échantillon (100, 102) définit un chemin d'écoulement d'échantillon jusqu'à l'emplacement de fourniture d'échantillon, et le chemin d'écoulement d'échantillon est sensiblement normal au chemin d'écoulement de gaz porteur à l'emplacement de l'échantillon.

3. Dispositif (90, 110, 120, 140) selon la revendication 1 ou 2, dans lequel la tête de fourniture d'échantillon (92) présente en outre une cavité (96) qui présente une paroi latérale de cavité et une paroi avant de cavité (98), la paroi avant étant traversée par l'ouverture de décharge (94), et la première extrémité (104) de la conduite de fourniture d'échantillon (100, 102) est agencée de manière à s'étendre dans la cavité et en direction de l'ouverture de décharge dans la paroi avant.

4. Dispositif (90, 110, 120, 140) selon la revendication 3, dans lequel une première partie de la conduite d'alimentation de gaz porteur (105) qui conduit à l'ouverture de décharge (94) est constituée par un espace qui est formé entre la paroi avant (98) de la cavité et la première extrémité (104) de la conduite de fourniture d'échantillon (100, 102).

5. Dispositif (90, 110, 120, 140) selon la revendication 4, dans lequel l'espace (105) présente une largeur de 0,2 mm, ou moins.

6. Dispositif (90, 110, 120, 140) selon la revendication 5, dans lequel l'espace (105) présente une largeur de 0,1 mm.

7. Dispositif (90, 110, 120, 140) selon l'une quelconque des revendications 3 à 6, dans lequel la paroi avant (98) de la cavité est sensiblement ronde et présente un diamètre de 3 mm.

8. Dispositif (90, 110, 120, 140) selon l'une quelconque des revendications 3 to 7, comprenant en outre un dispositif de déplacement de conduite de fourniture d'échantillon qui est agencé de manière à régler une distance entre la première extrémité (104) de la conduite de fourniture d'échantillon (100, 102) et la paroi avant (98) de la cavité.

9. Dispositif (90, 110, 120, 140) selon l'une quelconque des revendications 4 to 8 lorsqu'elle dépend de la revendication 4, dans lequel une deuxième partie de la conduite d'alimentation de gaz porteur qui conduit à la première partie comprend un ou plusieurs canal/canaux (106, 114) qui est/sont formé(s) soit entre une surface extérieure de la première extrémité de la conduite de fourniture d'échantillon (100, 102) et une surface intérieure de la paroi latérale de la cavité, soit à l'intérieur d'une région radialement extérieure de la première extrémité de la conduite de fourniture d'échantillon, ledit/lesdits un ou plusieurs canal/canaux établissant un chemin de communication de fluide entre une troisième partie (124) de la conduite d'alimentation de gaz porteur située en amont de la tête de pulvérisation d'alimentation (92) et la première partie.

10. Dispositif (90, 110, 120, 140) selon l'une quelconque des revendications précédentes, dans lequel la conduite de fourniture d'échantillon (100, 102) présente un diamètre interne de 0,3 mm.

11. Dispositif (90, 110, 120, 140) selon l'une quelconque des revendications précédentes, dans lequel l'ouverture de décharge (94) présente un diamètre de 0,3 mm.

12. Dispositif (90, 110, 120, 140) selon l'une quelconque des revendications précédentes, dans lequel l'ouverture de décharge (94) présente une longueur axiale de 0,5 mm.

13. Dispositif (90, 110, 120, 140) selon l'une quelconque des revendications précédentes, dans lequel le gaz porteur est l'oxygène.

14. Dispositif (90, 110, 120, 140) selon l'une quelconque des revendications précédentes, dans lequel l'élément d'alimentation (108) est traversé par une ouverture d'élément destinée à recevoir la conduite de fourniture d'échantillon (100, 102), un canal d'élément (124) étant formé entre une surface extérieure de la conduite de fourniture d'échantillon et une surface intérieure de l'ouverture d'élément, le canal d'élément étant agencé de manière à disposer une partie de la conduite d'alimentation de gaz porteur en amont de la tête de pulvérisation d'alimentation (92).

15. Dispositif (90, 110, 120, 140) selon l'une quelconque des revendication précédentes, comprenant en outre un dispositif de refroidissement (126) qui est agencé de manière à refroidir la partie amont de l'élément thermiquement conducteur.

16. Dispositif (90, 110, 120, 140) selon l'une quelconque des revendication précédentes, dans lequel l'élément d'alimentation (108) est l'élément thermiquement conducteur.

17. Dispositif (90, 110, 120, 140) selon l'une quelconque des revendication précédentes, dans lequel la chambre de combustion (150) présente en outre un port d'entrée (154) qui est configuré de manière à diriger un gaz d'appoint sur l'élément thermiquement conducteur à l'intérieur de la chambre de combustion, de manière à empêcher ou à réduire la condensation de l'échantillon de liquide ou des produits de combustion sur l'élément, lors de l'utilisation.

18. Dispositif (90, 110, 120, 140) selon l'une quelconque des revendications précédentes, dans lequel la conduite de fourniture d'échantillon (100, 102) est adaptée pour recevoir un tube de fourniture d'échantillon d'un échantillonneur automatique.

19. Dispositif (90, 110, 120, 140) selon la revendication 18, dans lequel la conduite de fourniture d'échantillon (100, 102) comprend une partie d'arrêt de diamètre interne réduit à la première extrémité, la partie d'arrêt servant d'arrêt pour le tube de fourniture d'échantillon de l'échantillonneur automatique.

20. Procédé d'analyse de combustion utilisant un analyseur de combustion, l'analyseur de combustion comprenant une chambre de combustion chauffée (130, 150) présentant une ouverture de chambre (132, 152); et un dispositif de fourniture d'échantillon comprenant:
un élément d'alimentation (108), le procédé comprenant les étapes suivantes :
prévoir un écoulement de gaz porteur à travers une conduite d'alimentation de gaz porteur (105, 106, 114, 122);
prévoir un écoulement d'un échantillon de liquide à travers une conduite d'alimentation (100, 102) qui est agencée de manière à passer à travers l'élément d'alimentation,
**caractérisé en ce que**:
l'élément d'alimentation (108) s'étend à travers l'ouverture de chambre et présente une extrémité d'élément aval qui est disposée à l'intérieur de la chambre de combustion;
le dispositif de fourniture d'échantillon comprend en outre une tête de pulvérisation d'alimentation (92) qui est reçue dans l'extrémité d'élément aval et qui présente une ouverture de décharge (94) pour distribuer un échantillon de liquide et un gaz porteur dans la chambre de combustion;
l'écoulement de gaz porteur à travers la conduite d'alimentation de gaz porteur (105, 106, 114, 122) est prévue dans l'ouverture de décharge;
l'échantillon est fourni dans l'écoulement de gaz porteur à l'intérieur du dispositif de fourniture d'échantillon à ou de façon adjacente à l'ouverture de décharge à l'intérieur de la chambre de combustion, de telle sorte que l'échantillon soit entraîné par le gaz porteur et soit introduit à travers l'ouverture de décharge dans la chambre de combustion sous la forme d'un aérosol; et
refroidir l'élément d'alimentation.

21. Procédé selon la revendication 20, dans lequel l'échantillon est fourni dans l'écoulement de gaz porteur dans une direction sensiblement normale à celui-ci.

22. Procédé selon la revendication 20 ou 21, dans lequel le gaz porteur est l'oxygène.

23. Procédé selon l'une quelconque des revendications 20 à 22, comprenant en outre l'étape qui consiste à faire passer un gaz d'appoint le long de l'élément d'alimentation refroidi (108) de manière à réduire ou à empêcher la formation de condensats sur celui-ci.
